# EUROPEAN PATENT APPLICATION

(11) **EP 2 690 207 A1**
(43) Date of publication of application: **29.01.2014**
(21) Application number: 12762772.7
(22) Date of filing: 23.03.2012
(51) Int. Cl.: D01F 6/84

(54) **BIODEGRADABLE POLYESTER FIBER HAVING EXCELLENT THERMAL STABILITY AND STRENGTH, AND METHOD FOR PRODUCING SAME**

(30) Priority: 25.03.2011 JP 2011067815; 25.03.2011 JP 2011067816
(71) Applicant: The University of Tokyo, Bunkyo-Ku Tokyo 113-8654 (JP); Kaneka Corporation, Osaka 530-8288 (JP)
(72) Inventor: IWATA, Tadahisa, Tokyo 113-8654 (JP); HONGO, Chizuru, Tokyo 113-8654 (JP); TAMURA, Masanobu, Takasago-shi Hyogo 676-8688 (JP)
(74) Representative: Vossius & Partner
(86) International application number: PCT/JP2012/057612
(87) International publication number: WO 2012/133231

(57) **Abstract**

The present invention aims to provide biodegradable polyester fibers excellent in thermal stability and fiber strength. Another aim is to provide a method for producing biodegradable polyester fibers excellent in mechanical properties, particularly in thermal stability. The present invention relates to biodegradable polyester fibers comprising a poly(3-hydroxybutyrate-co-3-hydroxyhexanoate) that has a 3HH molar fraction of 2 to 9 mol%. The present invention also relates to a method for producing the biodegradable polyester fibers, comprising a fiber forming step of melt-extruding a poly(3-hydroxybutyrate-co-3-hydroxyhexanoate) to form fibers at a temperature higher than or equal to the glass transition temperature of the poly(3-hydroxybutyrate-co-3-hydroxyhexanoate) but not higher than 70°C.

## Description

### TECHNICAL FIELD

The present invention relates to fibers made from a polyhydroxyalkanoate (hereinafter, occasionally abbreviated as "PHA"), and a method for producing the fibers.

### BACKGROUND ART

In recent years, environmental issues associated with waste plastics have been highlighted. Thus, a recycling society on a global scale is desired and biodegradable resins, which can be decomposed by bacteria after use, have been attracting attention. Among the biodegradable resins, PHAs, which are biological polymers, have been attracting attention in view of a reduction in carbon dioxide emissions and carbon dioxide fixation (carbon-neutral). Further, the use of PHAs for various formed products such as fibers and films has been considered because of their biodegradability and biocompatibility. Particularly, biodegradable and biocompatible fibers made from PHAs are expected to be in great demand in various fields such as medical products (e.g., surgical sutures), agricultural and fisheries products (e.g., bird nets, fishing lines, fishing nets), materials for beddings (e.g., bed sheets, bed pads, pillow cases), clothing (e.g., shirts), fabrics (e.g., sheets for vehicles, textiles), sanitary materials (e.g., nonwoven fabrics, filters), building products (e.g., ropes), and packages for foods and other items.

The production of fibers from poly-3-hydroxyalkanoates or the like among the PHAs has been examined. However, there have not been such fibers having mechanical properties that satisfy the requirements of the market as compared to common fibers. Moreover, among the PHAs, poly(3-hydroxybutyrate-co-3-hydroxyhexanoates) (hereinafter, occasionally abbreviated as "PHBH") particularly slowly crystallizes, and it is therefore difficult to produce fibers from PHBH by conventional melt spinning. Further, the resulting fibers have very poor mechanical properties.

In this context, Patent Literature 1 discloses a method for improving the mechanical properties, in which, immediately after a PHA is extruded through a melt extruder, the resulting filaments are rapidly cooled to a temperature not higher than 15°C plus the glass transition temperature of the polymer to prevent the filaments from blocking, rapidly cold stretched at a temperature not higher than 20°C plus the glass transition temperature to accelerate partial crystallization of the filaments, and then heat treated under tension. Patent Literature 2 also discloses a method in which, after cold stretching, stretching is further performed at a temperature higher than or equal to the glass transition temperature, and heat treatment under tension is then performed.

Such methods enable spinning of even polymers having slow crystallization kinetics, such as PHBH, to provide filaments with specific characteristics. In the methods, however, the heat treatment under tension causes a problem in the dimensional stability of the fibers and also causes the fibers to have poor flexibility. Therefore, there is a drawback that a trouble may occur during processing into PHA fiber products.

Moreover, the production of films or fibers from some of the PHAs, such as poly-3-hydroxyalkanoates, has been examined, but there is a drawback that their physical properties may be degraded over time due to secondary crystallization caused after forming. In order to solve such a problem, it is suggested that an inorganic substance such as boron nitride is added to poly-3-hydroxyalkanoates to accelerate the crystallization. However, formed products resulting from such a method have a lot of problems such as a reduction in strength and deterioration of the surface appearance, and therefore the method has an insufficient effect.

In order to solve such a problem, Patent Literature 3 discloses a method of melt kneading a PHA and a swellable layered silicate treated with an organic onium ion, using a single screw extruder, a twin screw extruder, a roll kneader, a Brabender mixer or the like. However, the swellable layered silicate needs to be melt kneaded with high shearing force in order to be uniformly dispersed. As a result, heat is generated by the shearing during melt kneading, and at the same time an organic onium salt is formed. These factors accelerate decomposition of the PHA resin. Therefore, the formed product cannot retain desired mechanical properties and the like.

Furthermore, among the PHAs, poly(3-hydroxybutyrate-co-3-hydroxyhexanoate) (hereinafter, occasionally abbreviated as "PHBH") particularly slowly crystallizes, and it is therefore difficult to produce fibers from PHBH by conventional melt spinning. In order to solve such a problem, Patent Literature 4 discloses a method in which, immediately after a PHA is extruded through a melt extruder, the resulting filaments are rapidly cooled to a temperature not higher than the glass transition temperature of the polymer to prevent the filaments from blocking, and then rapidly cold stretched at a temperature not lower than the glass transition temperature to accelerate partial crystallization of the filaments. Such a method enables spinning of even polymers having slow crystallization kinetics, such as PHBH, to provide stretched filaments with specific characteristics. In the method, however, the resulting filaments need to be rapidly cooled to a temperature not higher than the glass transition temperature (about 0°C) immediately after the melt extrusion and also need to be heated in a hot water bath immediately after the cooling. Therefore, the method causes huge energy consumption and energy loss as the cooling and heating steps are repeated and drying equipment is generally required before the stretching step due to the use of a hot water bath. Further, the method has another drawback that large-scale production equipment needs to be installed because refrigeration equipment is required to cool the filaments to a temperature not higher than the glass transition temperature.

### CITATION LIST

### PATENT LITERATURE

Patent Literature 1: JP 2003-328230 A
Patent Literature 2: JP 2003-328231 A
Patent Literature 3: JP 2006-070092 A
Patent Literature 4: JP 2002-371431 A

### SUMMARY OF INVENTION

### TECHNICAL PROBLEM

Although, as described above, biodegradable polyester fibers have been examined in order to increase their strength, there have not been such fibers having mechanical properties that satisfy the requirements of the market. Particularly, fibers having dimensional stability have not been achieved. In view of the above circumstances, the present invention has an object to provide biodegradable polyester fibers excellent in thermal stability and fiber strength.

Moreover, although various examinations are made on biodegradable polyester resins in order to accelerate the crystallization, methods of adding an additive do not provide desired products because the additive decomposes during melt mixing to deteriorate the PHA resin. Furthermore, in methods with improved steps, a lot of refrigeration equipment or drying equipment is needed. Therefore, spinning equipment consuming a large amount of energy or including large production equipment is needed. Thus, biodegradable polyester fibers satisfying desired mechanical properties have not been produced yet. In view of the above circumstances, the present invention aims to provide a method for producing biodegradable polyester fibers excellent in mechanical properties, particularly in thermal stability.

### SOLUTION TO PROBLEM

As a result of intensive investigations in an attempt to solve the above problems, the present inventors have found PHA fibers having a reduced dry heat shrinkage as well as fiber strength. Thus, the present invention has been completed.

Further, as a result of intensive investigations by the present inventors in an attempt to solve the above problems, it has been found that fibers excellent in mechanical properties can be provided by forming a PHA into fibers under specific spinning conditions, stretching, in a stretching step, the fibers within a temperature range such that no energy is wasted in the production, and relaxing the fibers in a heat treatment step. In particular, the present inventors have found a method for producing biodegradable polyester fibers excellent in thermal stability. Thus, the present invention has been completed.

Specifically, the present invention relates to biodegradable polyester fibers, comprising a poly(3-hydroxybutyrate-co-3-hydroxyhexanoate) that has a 3HH molar fraction of 2 to 9 mol%.

The 3HH molar fraction is preferably 3 to 9 mol%, and more preferably 3 to 7 mol%.

It is preferred that the biodegradable polyester fibers have a dry heat shrinkage at 100°C of less than 20% and a fiber strength of not less than 1.5 cN/dtex.

The present invention also relates to a method for producing the biodegradable polyester fibers, comprising a fiber forming step of melt-extruding a poly(3-hydroxybutyrate-co-3-hydroxyhexanoate) to form fibers at a temperature higher than or equal to the glass transition temperature of the poly(3-hydroxybutyrate-co-3-hydroxyhexanoate) but not higher than 70°C.

It is preferred that the fiber forming step be performed at a temperature 15°C or more higher than the glass transition temperature of the poly(3-hydroxybutyrate-co-3-hydroxyhexanoate) but not higher than 70°C.

It is preferred that the fiber forming step be performed at a temperature not higher than 60°C.

It is preferred that the method further comprise a stretching step and a heat treatment step.

It is preferred that the heat treatment step comprise a heat treatment at a temperature 20°C or more higher than the crystallization temperature of the poly(3-hydroxybutyrate-co-3-hydroxyhexanoate).

It is preferred that the heat treatment step comprise a relaxation step.

In the relaxation step, the resulting biodegradable polyester fibers preferably have a relaxation rate of 2 to 17%, more preferably 3 to 15%.

### ADVANTAGEOUS EFFECTS OF INVENTION

The PHA fibers of the present invention have dimensional stability on heating and high fiber strength. The production method of the present invention enables, for example, simplification of production equipment and reduction in energy consumption without deteriorating the PHA resin, and further enables production of PHA fibers excellent in thermal stability.

### DESCRIPTION OF EMBODIMENTS

The present invention is described in detail below.

The biodegradable polyester fibers of the present invention is preferably a PHA containing a 3-hydroxyalkanoate-derived repeating unit represented by

[-CHR-CH₂-CO-O-]

wherein R is an alkyl group represented by CₙH₂ₙ₊₁, and n is an integer of 1 to 15.

PHAs produced by bacteria are preferred, and any bacteria producing PHAs can be used as long as they have PHA-producing ability. Known poly(3-hydroxybutyrate)-producing bacteria (hereinafter, poly(3-hydroxybutyrate) may be occasionally abbreviated as "PHB") are, for example, *Bacillus megaterium,* which was first discovered in 1925, and other natural bacteria such as *Cupriavidus necator* (old classification: *Alcaligenes eutrophus, Ralstonia eutropha*) and *Alcaligenes latus.* PHB is accumulated within the cells of such bacteria.

Genetically modified bacteria in which various PHA synthesis-related genes are inserted may be used and culture conditions including the type of medium may be optimized.

Specifically, the PHA may suitably be a polymer that contains a unit derived from a 3-hydroxybutyrate and a unit derived from a 3-hydroxyhexanoate.

The PHA preferably has a weight average molecular weight of 300,000 to 3, 000, 000, more preferably 400, 000 to 2, 500, 000.

The PHA fibers of the present invention is particularly preferably, but not limited to, a PHBH, which is difficult to spin by a conventional method, or a copolymer obtained by polymerizing a composition containing 3HB, 3HH, and another hydroxyalkanoate as a third component. In the case of PHBH, the 3HH molar fraction is 2 to 9 mol%, preferably 3 to 9 mol%, and more preferably 3 to 7 mol%. If the 3HH molar fraction is more than 9 mol%, the crystallization temperature and processing temperature of PHBH come close to each other and therefore PHBH cannot be formed into fibers. If the 3HH molar fraction is less than 2 mol%, the melting temperature and decomposition temperature of PHBH come close to each other and therefore PHBH is difficult to form into fibers. PHBH having the molar fraction in the above ranges is formed into fibers with further improved spinnability.

When the PHA fibers of the present invention are formed by spinning, the following components may be contained: polymer components other than the PHA; additives such as antioxidants, ultraviolet absorbers, colorants (e.g. dyes, pigments), plasticizers, lubricants, inorganic fillers, and antistatic agents; and nucleating agents used for controlling crystallization kinetics. The amount of such other polymer components and additives may be any amount that does not impair the characteristics of the PHA.

The PHA fibers of the present invention may be produced by any method, and is preferably produced by melt-extruding a PHA to form fibers at a temperature higher than or equal to the glass transition temperature of the PHA but not higher than 70°C. The method preferably includes, in addition to the fiber forming step, a stretching step and a heat treatment step after the fiber forming step. Further, the heat treatment step preferably includes a step of relaxing the fibers simultaneously with heating treatment, in order to improve the mechanical properties, particularly dimensional stability against heat, of the resulting fibers. The fiber forming step to the stretching step are preferably continuously conducted, but the production method may be a discontinuous method depending on the characteristics of the PHA resin to be used.

The polyhydroxyalkanoate is melt-extruded to form fibers at a temperature higher than or equal to the grass transition temperature of the PHA but not higher than 70°C, preferably not higher than 60°C. If fibers are formed at a temperature higher than 70°C, the fibers are likely to be rapidly crystalized immediately after spinning and thus have reduced flexibility. For this reason, the fibers tend to be broken in subsequent steps and therefore the spinnability tends to be reduced. The temperature in the melt extrusion to form fibers herein refers to a temperature at a portion just below a spinneret after the fibers are spun through the spinneret. Conversely, the lower limit of the temperature in forming fibers is preferably a temperature 15°C or more higher than the glass transition temperature of the PHA, more preferably a temperature 17°C or more higher than the glass transition temperature of the PHA, and still more preferably a temperature 19°C or more higher than the glass transition temperature of the PHA, in view of saving the energy consumption for cooling.

The equipment for the fiber forming step after the melt extrusion may be equipment that includes a water tank for immersing fibers in the liquid to control the temperature or equipment in which fibers are allowed to pass through a temperature-controlled atmosphere in the atmosphere. In view of reducing the energy waste in the equipment for the fiber forming step and in view of complication and operation of the production equipment, fibers are preferably allowed to pass through temperature-controlled equipment in the atmosphere although the equipment is not particularly limited.

The melt extrusion may be performed using any commonly used equipment such as a melt extruder as long as the molecular weight and melt viscosity of the PHA to be used can be adequately kept. The melt extruder to be used may be either compression extrusion equipment capable of keeping the temperature of a melt constant or screw extrusion equipment capable of continuous supply. The former equipment is suitable for small-scale melt extrusion and the latter equipment is suitable for industrial-scale production.

The PHA is preferably preliminarily melt kneaded and processed into pellets before use. Further, the PHA may be melt kneaded with the aforementioned other polymer components, additives, nucleating agents and the like to prepare pellets before use.

The PHA fibers formed are preferably stretched. When the fibers are stretched, the time interval between the completion of the fiber forming step and the beginning of the stretching step is preferably 120 minutes or less, more preferably 60 minutes or less, and still more preferably 30 minutes or less. Most preferably, stretching is performed immediately after the fiber forming step. In cases where stretching is performed immediately after the fiber forming step, the fiber forming step is preferably sequentially followed by the stretching step. If the time interval to the beginning of the stretching step is long, partial crystallization tends to proceed in the polymer, leading to a reduction in the maximum stretching ratio from the expected ratio and a reduction in mechanical properties.

In the stretching step, the fibers may be stretched by fixing the fibers to a stretching machine or the like and applying tension to them, or may be stretched by applying tension to the fibers between two or more rolls by increasing the rotation speed of a take-up roll. The stretching ratio at this time is typically 200% or more, preferably 400% or more, and more preferably 600% or more. If the stretching ratio is less than 200%, the crystals in the fibers tend to be insufficiently oriented, thereby leading to reduced mechanical properties. The temperature during stretching is not particularly limited as long as it is higher than or equal to the glass transition temperature but not higher than the crystallization temperature.

The amount of time required for stretching is not particularly limited as long as the stretching provides crystal orientation that does not affect mechanical properties. In cases where the fibers are fixed to a stretching machine or the like, the amount of time may be determined according to the stretching ratio. In cases where the fibers are stretched between two or more rolls, the amount of time may be determined according to the rotation speed of a take-up roll. The stretching time is preferably 1 to 10 seconds.

The stretched fibers are preferably heat treated. The heat treatment temperature is preferably a temperature 20°C or more higher than the crystallization temperature of the PHA, more preferably a temperature 30°C or more higher than the crystallization temperature of the PHA, and still more preferably a temperature 40°C or more higher than the crystallization temperature of the PHA. The upper limit of the heat treatment temperature is not particularly limited as long as it is not higher than the melting point of the PHA to be used. The heat treatment temperature may be set depending on the properties required in applied fields. If the heat treatment temperature is lower than the temperature 20°C higher than the crystallization temperature, disadvantageously, the produced fibers or fiber products, when exposed to an atmosphere at a temperature higher than or equal to the crystallization temperature, are likely to undergo secondary crystallization, which tends to cause the produced fibers or fiber products to have remarkably reduced mechanical properties. The heat treatment time is preferably 1 second to 30 minutes, more preferably 1 to 20 minutes, and still more preferably 2 to 15 minutes.

The heat treatment method is not particularly limited. For example, the fibers may be allowed to pass through uniformly-heated air or may be brought into contact with a roller heated by electricity, a roller heated by steam or oil or the like.

In the heat treatment step, the fibers may be heat treated under tension. Such a heat treatment step preferably includes a relaxation step in order to improve the mechanical properties, particularly thermal stability, of the resulting fibers. The relaxation temperature is not particularly limited as long as it is higher than or equal to the heat treatment temperature but not higher than the melting point. The relaxation temperature is preferably the same temperature as the heat treatment step. The relaxation rate of the fibers is preferably 2 to 17%, and more preferably 3 to 15%, in view of the thermal stability of the fibers. If the relaxation rate is more than 17%, thermal stability can be secured, but the fiber strength (a mechanical property) is remarkably reduced due to excessive relaxation. Further, such a relaxation rate unfavorably causes an increase in production costs as the larger the relaxation rate, the poorer the productivity. If the relaxation rate is less than 2%, the thermal stability is reduced and the dimensional stability of the fibers when heated is poor, which means unfavorable fibers or fiber products.

In the heat treatment step and the relaxation step, the fibers may be fixed to a heat treatment machine or the like and heat treated under constant tension or under relaxed tension. Alternatively, the fibers may be held between two or more rolls and heat treated under the condition that the speeds of a feed roll and a take-up roll are maintained so that the tension is kept constant, or under the condition that the tension is relaxed by increasing the speed of a feed roll or decreasing the speed of a take-up roll.

The PHA fibers of the present invention have a fiber shrinkage measured after being left in a dry heat atmosphere at 100°C for 30 minutes of less than 20% and a fiber strength of 1.5 cN/dtex or more. PHA fibers having a shrinkage of less than 20% but having a fiber strength of less than 1.5 cN/dtex frequently break due to lack of strength during fiber processing. This may cause troubles in the step. Conversely, PHA fibers having a fiber strength of 1.5 cN/dtex or more but having a shrinkage of not less than 20% greatly shrink during processing into products. This may also cause troubles in the step.

The shrinkage of the fibers measured after being left in a dry heat atmosphere at 100°C for 30 minutes is preferably less than 15%, and more preferably less than 10%. Also, the fiber strength is preferably 1.8 cN/dtex, and more preferably 2.0 cN/dtex or more.

Thus obtained biodegradable polyester fibers of the present invention can be suitably used like known fibers in the agriculture, fisheries, forestry, clothing materials, non-clothing fiber products (for example, curtains, carpets, bags), sanitary products, garden supplies, automobile parts, building materials, medicine, food industry, and other fields.

### EXAMPLES

The present invention will, hereinafter, be described in more detail with reference to examples. The present invention is not limited to the examples at all.

The prepared fibers were evaluated by the following methods.

### (Experimental Example 1) "Dry heat shrinkage"

The thermal stability as a mechanical property of heat treated PHA fibers was rated by the dry heat shrinkage. The rating criteria are as follows. After PHA fibers were hung and exposed to 100°C hot air for 30 minutes with no load, the shrinkage of the PHA fibers was determined and the thermal stability was rated on a 3-point scale as good (the shrinkage is less than 10%), fair (the shrinkage is at least 10% but less than 20%), and poor (the shrinkage is 20% or more). PHA fibers rated "good" are considered to have excellent thermal properties.

### (Experimental Example 2) "Fiber strength"

The fiber strength as a mechanical property of PHA fibers was rated by the maximum strength at break using a tensilon universal testing machine RTC-1210A (product of A&D Company) in accordance with JIS-L1015. The rating criteria are as follows. The fiber strength was rated on a 3-point scale as good (the maximum strength at break is 2 cN/dtex or more), fair (the maximum strength at break is at least 1.5 cN/dtex but less than 2.0 cN/dtex), and poor (the maximum strength at break is less than 1.5 cN/dtex). PHA fibers rated "good" are considered to have excellent fiber strength.

### (Experimental Example 3) "Processability"

The processability of PHA fibers in processing into a nonwoven fabric was rated. The rating criteria are as follows. The processability was rated on a 2-point scale as good (a nonwoven fabric was prepared without problems) and poor (a nonwoven fabric was prepared with problems). PHA fibers rated "good" are considered to have excellent processability.

### (Experimental Example 4) "Overall rating"

An overall rating was given based on the results of evaluating the dry heat shrinkage, the fiber strength, and the processability. The rating criteria are as follows. PHA fibers were rated on a 2-point scale as good (all rating results are good) and poor (at least one rating result is "fair" or "poor"). PHA fibers with an overall rating of "good" are considered to be excellent in the thermal stability and fiber strength defined herein.

### (Experimental Example 5) "Evaluation of spinnability"

The spinnability of a PHA resin when melt-extruded to form fibers was rated based on the following criteria: Excellent: Spun fibers are not fused to one another, Good: Fused fibers can be separated during fiber processing, Fair: Fused fibers can be separated by hands, and Poor: A PHA resin cannot be processed into fibers.

### (Preparation 1)

A PHBH (3HH molar fraction: 5 mol%, Mw (weight average molecular weight): about 500,000, glass transition temperature: 0°C, crystallization temperature: 60°C, melting point: 160°C) was produced from *Alcaligenes eutrophus* AC32 (J. Bacteriol, 179, 4821 (1997)) (FERM BP-6038) obtained by introducing a PHA synthetase gene derived from *Aeromonas caviae* into *Alcaligenes eutrophus,* as a bacterium producing a 3-hydroxyalkanoate polymer by suitably controlling starting materials and culture conditions. The PHBH was pelletized before use. The pellets were melt-extruded in a melt extruder in which the temperature was increased to 175°C, and spun through a spinneret (orifice size: 1.0 mm, number of orifices: 10, spinneret diameter: 20 mm), followed by subjecting them to a stretching step and a heat treatment step to prepare PHA fibers. The spinning conditions after spinning from the spinneret are shown in Table 1 as PHA fiber production conditions. Fibers of Examples 1 to 5 were prepared according to these spinning conditions.

### (Preparation 2)

Fibers of Comparative Example 1 were prepared by the same method as in Preparation 1, except that the 3HH molar fraction was 11 mol% (Mw (weight average molecular weight) : about 500,000, glass transition temperature: 0°C, crystallization temperature: 50°C, melting point: 140°C).

### (Preparation 3)

Fibers of Example 6 were prepared by the same method as in Preparation 1, except that the 3HH molar fraction was 7 mol% (Mw (weight average molecular weight): about 500,000, glass transition temperature: 0°C, crystallization temperature: 55°C, melting point: 150°C).

### (Preparation 4)

Fibers of Example 7 were prepared by the same method as in Preparation 1, except that the 3HH molar fraction was 3 mol% (Mw (weight average molecular weight): about 500,000, glass transition temperature: 0°C, crystallization temperature: 70°C, melting point: 165°C).

**[Table 1]**

| PHA fiber production method | | | | | |
|---|---|---|---|---|---|
| | Temperature at a portion just below a spinneret after spinning | Stretching conditions | | Heat treatment conditions | |
| | | Temperature | Stretching ratio | Temperature | Relaxation rate |
| Example 1 | -10°C | 40°C | 600% | 100°C | 5% |
| Example 2 | 20°C | 40°C | 600% | 100°C | 5% |
| Example 3 | 60°C | 40°C | 600% | 100°C | 5% |
| Example 4 | 20°C | 40°C | 600% | 100°C | 3% |
| Example 5 | 20°C | 40°C | 600% | 100°C | 15% |

### (Example 1)

PHA fibers having a dry heat shrinkage of 6% and a fiber strength of 2.6 cN/dtex were prepared according to Preparation 1.

### (Example 2)

This experiment was performed similarly to that of Example 1, except that PHA fibers having a dry heat shrinkage of 5% and a fiber strength of 2.8 cN/dtex were prepared.

### (Example 3)

This experiment was performed similarly to that of Example 1, except that PHA fibers having a dry heat shrinkage of 8% and a fiber strength of 2.2 cN/dtex were prepared.

### (Example 4)

This experiment was performed similarly to that of Example 1, except that PHA fibers having a dry heat shrinkage of 9% and a fiber strength of 2.5 cN/dtex were prepared.

### (Example 5)

This experiment was performed similarly to that of Example 1, except that PHA fibers having a dry heat shrinkage of 3% and a fiber strength of 2.1 cN/dtex were prepared.

Table 2 shows the quality evaluation results of the fibers of the examples.

**[Table 2]**

| Quality evaluation results | | | | | | |
|---|---|---|---|---|---|---|
| | Dry heat shrinkage (at 100°C) | | Fiber strength | | Processability | Overall rating |
| | % | Rating | cN/dtex | Rating | Rating | |
| Example 1 | 6 | Good | 2.6 | Good | Good | Good |
| Example 2 | 5 | Good | 2.8 | Good | Good | Good |
| Example 3 | 8 | Good | 2.2 | Good | Good | Good |
| Example 4 | 9 | Good | 2.5 | Good | Good | Good |
| Example 5 | 3 | Good | 2.1 | Good | Good | Good |

The fibers of Examples 1 to 5 had high fiber strength and also had excellent processability.

### (Examples 6 to 8, Comparative Example 1)

The spinnability of the fibers obtained in Preparations 1 to 4 was evaluated according to Experimental Example 5. Table 3 shows the results.

**[Table 3]**

| Evaluation of spinnability | | |
|---|---|---|
| | 3HH molar fraction (mol%) | Spinnability |
| Example 8 (Preparation 4) | 3 | Excellent |
| Example 6 (Preparation 1) | 5 | Excellent |
| Example 7 (Preparation 3) | 7 | Good |
| Comparative Example 1 (Preparation 2) | 11 | Fair to Poor |

The fibers with a 3HH molar fraction of 3 mol% obtained in Preparation 4 and the fibers with a 3HH molar fraction of 5 mol% obtained in Preparation 1 were particularly excellent in spinnability, and the fibers with a 3HH molar fraction of 7 mol% obtained in Preparation 3 were also excellent in spinnability, whereas the fibers with a 3HH molar fraction of 11 mol% obtained in Preparation 2 were poor in spinnability.

### INDUSTRIAL APPLICABILITY

Since the biodegradable polyester fibers of the present invention are excellent in thermal stability and fiber strength, the fibers are expected to be in great demand in various fields. Moreover, the method for producing the biodegradable polyester fibers of the present invention enables, for example, simplification of production equipment and reduction in energy consumption without deteriorating the PHA, and further enables production of PHA fibers excellent in thermal stability. Thus, the present invention has great significance in the industry.

## Claims

1. Biodegradable polyester fibers, comprising a poly(3-hydroxybutyrate-co-3-hydroxyhexanoate) that has a 3HH molar fraction of 2 to 9 mol%.

2. The biodegradable polyester fibers according to claim 1,
wherein the 3HH molar fraction is 3 to 9 mol%.

3. The biodegradable polyester fibers according to claim 2,
wherein the 3HH molar fraction is 3 to 7 mol%.

4. The biodegradable polyester fibers according to any one of claims 1 to 3, having a dry heat shrinkage at 100°C of less than 20% and a fiber strength of not less than 1.5 cN/dtex.

5. A method for producing the biodegradable polyester fibers according to any one of claims 1 to 4, comprising a fiber forming step of melt-extruding a poly(3-hydroxybutyrate-co-3-hydroxyhexanoate) to form fibers at a temperature higher than or equal to the glass transition temperature of the poly(3-hydroxybutyrate-co-3-hydroxyhexanoate) but not higher than 70°C.

6. The method according to claim 5,
wherein the fiber forming step is performed at a temperature 15°C or more higher than the glass transition temperature of the poly(3-hydroxybutyrate-co-3-hydroxyhexanoate) but not higher than 70°C.

7. The method according to claim 5 or 6,
wherein the fiber forming step is performed at a temperature not higher than 60°C.

8. The method according to any one of claims 5 to 7, further comprising a stretching step and a heat treatment step.

9. The method according to claim 8,
wherein the heat treatment step comprises a heat treatment at a temperature 20°C or more higher than the crystallization temperature of the poly(3-hydroxybutyrate-co-3-hydroxyhexanoate).

10. The method according to claim 8 or 9,
wherein the heat treatment step comprises a relaxation step.

11. The method according to claim 10,
wherein, in the relaxation step, the resulting biodegradable polyester fibers have a relaxation rate of 2 to 17%.

12. The method according to claim 11,
wherein the relaxation rate is 3 to 15%.
